# EUROPEAN PATENT APPLICATION

(11) **EP 2 603 050 A1**
(43) Date of publication of application: **12.06.2013**
(21) Application number: 11814546.5
(22) Date of filing: 28.07.2011
(51) Int. Cl.: H04W 72/04, H04W 16/26, H04W 92/04

(54) **CONNECTION METHOD AND WIRELESS BASE STATION**

(30) Priority: 05.08.2010 JP 2010176820
(71) Applicant: NTT DOCOMO, INC., Chiyoda-ku Tokyo 100-6150 (JP)
(72) Inventor: TAKAHASHI, Hideaki, Tokyo 100-6150 (JP); HAPSARI, Wuri Andarmawanti, Tokyo 100-6150 (JP); UMESH, Anil, Tokyo 100-6150 (JP); IWAMURA, Mikio, Tokyo 100-6150 (JP)
(74) Representative: HOFFMANN EITLE
(86) International application number: PCT/JP2011/067314
(87) International publication number: WO 2012/017920

(57) **Abstract**

A connection method of connecting a relay node RN to a radio base station DeNB including a step A of notifying, by the relay node RN, to the radio base station DeNB, a first frequency band supported as a frequency band to be used in a Uu space; a step B of determining, by the radio base station DeNB, the carrier frequency and the bandwidth to be used in the Uu space by using the first frequency band; and a step C of notifying, by the radio base station DeNB, to the relay node RN, the determined carrier frequency and the bandwidth.

## Description

### [Technical Field]

The present invention relates to a connection method and a radio base station.

### [Background Art]

In an LTE (Long Term Evolution)-Advanced scheme, it is possible to use a relay node RN connectable to a radio base station DeNB (Doner eNB) through a Un interface.

The relay node RN is configured to perform radio communication with the radio base station DeNB via the Un interface, and perform radio communication with a mobile station UE via a Uu interface.

### [Citation List]

### [Non Patent Literature]

[NPL 1] 3GPP TS36.300 (V10.0.0), "Evolved Universal Terrestrial Radio Access (E-UTRA) and Evolved Universal Terrestrial Radio Access Network (E-UTRAN) Physical Channels", June, 2010
[NPL 2] 3GPP TR36.814 (V9.0.0), "Further Advancements for E-UTRA Physical Layer Aspects", March, 2010
[NPL 3] 3GPP TS36.331 (V9.3.0), "Radio Resource Control (RRC); Protocol specification", June, 2010

### [Summary of Invention]

### [Technical Problem]

However, there is a problem with the LTE-Advanced scheme that there is no specification as to how the carrier frequency and the bandwidth to be used in a radio space (hereinafter, the Uu space) made available to a Uu interface must be determined.

Thus, the present invention has been achieved in view of the aforementioned problem, and an object thereof is to provide a connection method and a radio base station with which it is possible to appropriately determine a carrier frequency and a bandwidth to be used in a Uu space.

### [Solution to Problem]

A first characteristic of the present invention is summarized as a connection method of connecting a relay node to a radio base station including a step A of notifying, by the relay node, to the radio base station, a first frequency band supported as a frequency band to be used in a radio space with a mobile station; a step B of determining, by the radio base station, the carrier frequency and the bandwidth to be used in the radio space between the relay node and the mobile station by using the first frequency band; and a step C of notifying, by the radio base station, to the relay node, the determined carrier frequency and bandwidth.

A second characteristic of the present invention is summarized as a radio base station to which a relay node can be connected, and which includes an acquisition unit that acquires a first frequency band supported as a frequency band to be used in a radio space with a mobile station, from the relay node, in the procedure of connecting the relay node and the radio base station; a determination unit that determines a carrier frequency and a bandwidth to be used in the radio space between the relay node and the mobile station by using the first frequency band in the connection procedure; and a notification unit that notifies the determined carrier frequency and bandwidth to the relay node in the connection procedure.

### [Advantageous Effects of Invention]

As described above, according to the present invention, it is possible to provide a connection method and a radio base station with which it is possible to appropriately determine a carrier frequency and a bandwidth to be used in a Uu space.

### [Brief Description of Drawings]

[Fig. 1] Fig. 1 is a diagram illustrating the entire configuration of a mobile communication system according to a first embodiment of the present invention.
[Fig. 2] Fig. 2 is a functional block diagram of a radio base station according to the first embodiment of the present invention.
[Fig. 3] Fig. 3 is a sequence diagram showing the operation of the mobile communication system according to the first embodiment of the present invention.
[Fig. 4] Fig. 4 is a diagram illustrating an example of a format of an information element "UE-EUTRA-Capability" in "RRC UE(RN) Capability Information" used in the mobile communication system according to the first embodiment of the present invention.

### [Description of Embodiments]

### (Mobile communication system according to first embodiment of the present invention)

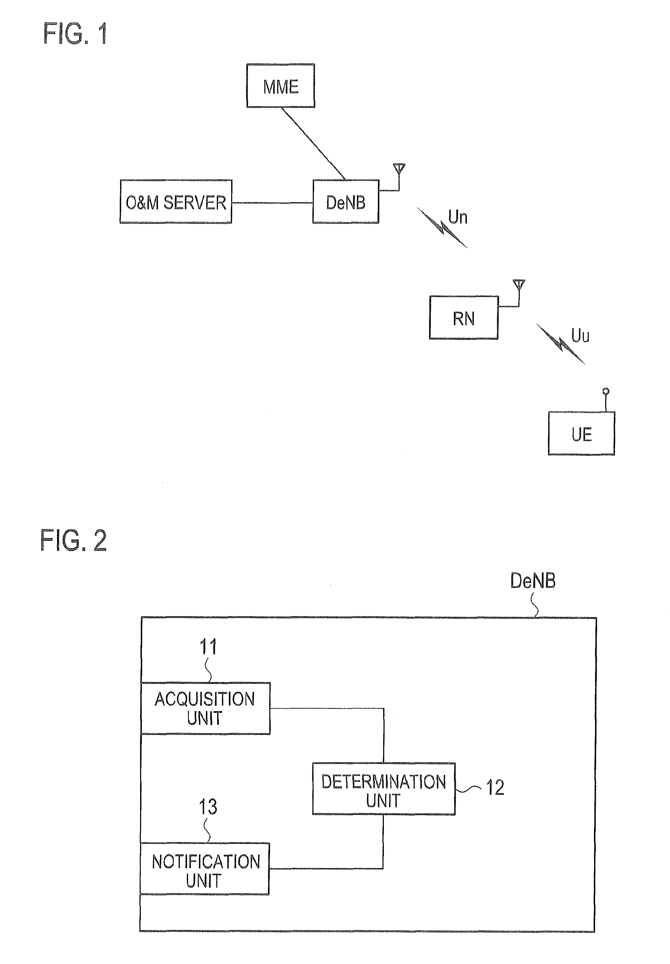

With reference to Fig. 1 to Fig. 4, a mobile communication system according to a first embodiment of the present invention will be described.

The mobile communication system according to the present embodiment is an LTE-Advanced mobile communication system, and includes a mobile management node MME (Mobility Management Entity), a radio base station DeNB, a relay node RN, and an O&M (Operation and Maintenance) server, as illustrated in Fig. 1.

The relay node RN is configured to perform radio communication with the radio base station DeNB via the Un interface, and perform radio communication with a mobile station UE via a Uu interface.

As illustrated in Fig. 2, the radio base station DeNB includes an acquisition unit 11, a determination unit 12, and a notification unit 13.

The acquisition unit 11 is configured to acquire a first frequency band (for example, a 1.7-GHz band or a 2-GHz band) supported as a frequency band to be used in the Uu space, from the relay node RN, in the procedure of connecting the relay node RN and the radio base station DeNB.

For example, the acquisition unit 11 may be configured to acquire the first frequency band from the "RRC UE(RN) Capability Information" transmitted by the relay node RN, and from other RRC messages (for example, the "RN Information" stipulated in 3GPP contributed article R2-103874).

Furthermore, in the relay node RN, if the first frequency band is the same as a second frequency band (for example, a 1.7-GHz band and a 2-GHz band) supported as a frequency band used in a radio space (hereinafter, the Un space) made available to a Un interface, the acquisition unit 11 may be configured to acquire the second frequency band included in "RRC UE(RN) Capability Information" transmitted by the relay node RN, and to regard the acquired second frequency band as the first frequency band.

Furthermore, the acquisition unit 11 is configured to acquire a frequency band that can be used in the Uu space, from the O&M server, at any optional timing.

The determination unit 12 is configured to determine the carrier frequency and the bandwidth (band) to be used in the Uu space using the first frequency band acquired by the acquisition unit 11, in the above connection procedure.

The determination unit 12 may determine "EARFCN (EUTRA Absolute Radio Frequency Channel Number)" stipulated in Chapter 5.7.3 of 3GPP TS36.101 as the carrier frequency, and "Operating bandwidth" stipulated in Chapter 5.5 of 3GPP TS36.101 as the bandwidth.

Specifically, the determination unit 12 is configured to determine the above carrier frequency and the bandwidth by using the frequency band acquired from the above first frequency band and the O&M server.

The notification unit 13 is configured to notify the carrier frequency and the bandwidth determined by the determination unit 12 to the relay node RN, in the above connection procedure.

For example, the notification unit 13 is configured to notify the above carrier frequency and the bandwidth by using "RRC RN Configuration" and other RRC messages.

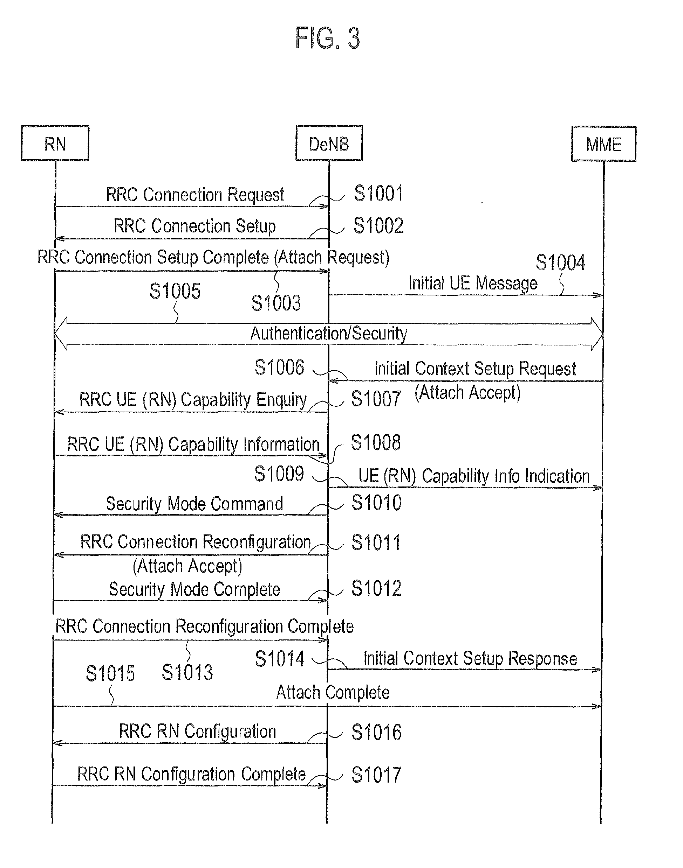

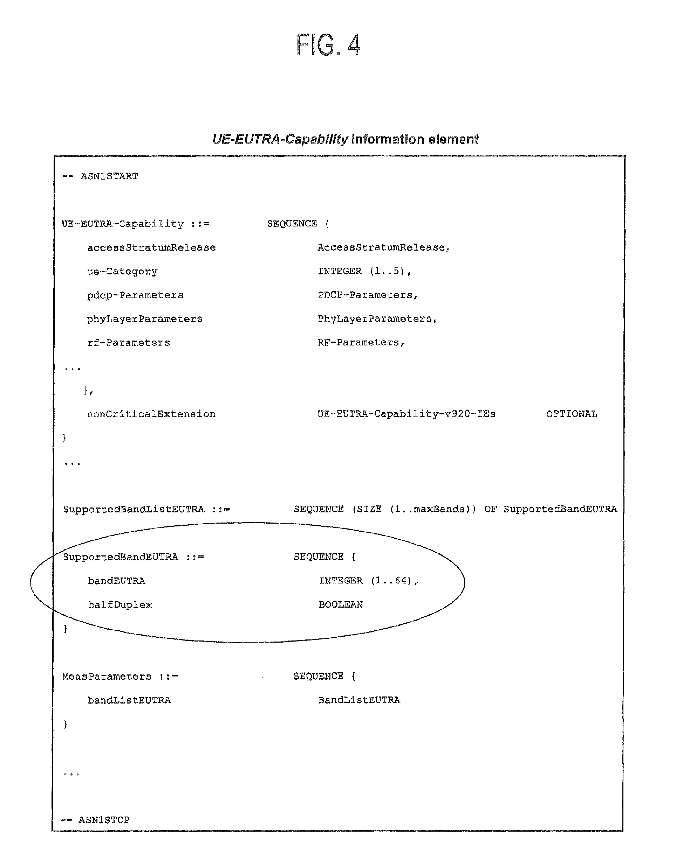

With reference to Fig. 3 and Fig. 4, the procedure of connecting the relay node RN and the radio base station DeNB in the mobile communication system according to the present embodiment will be described.

As illustrated in Fig. 3, in step S1001, the relay node RN transmits "RRC Connection Request" to the radio base station DeNB.

In step S1002, the radio base station DeNB transmits "RRC Connection Setup" to the relay node RN.

In step S1003, the relay node RN transmits "RRC Connection Setup Complete" including "Attach Request" to the radio base station DeNB.

In step S1004, the radio base station DeNB transmits "Initial UE Message" to the mobile management node MME.

In step S1005, the "Authentication/Security" process is performed.

In step S1006, the mobile management node MME transmits "Initial Context Setup Request" including the "Attach Accept" to the radio base station DeNB.

In step S1007, the radio base station DeNB transmits "RRC UE(RN) Capability Enquiry" to the relay node RN.

In step S1008, the relay node RN transmits "RRC UE(RN) Capability Information" to the radio base station DeNB.

The relay node RN, for example, may notify the first frequency band supported as the frequency band to be used in the Uu space, and the second frequency band supported as the frequency band to be used in the Un space, depending on the information element "SupportedBandEUTRA" in the information element "UE-EUTRA-Capability" in "RRC UE(RN) Capability Information", as illustrated in Fig. 4.

Alternately, the relay node RN, for example, may notify the second frequency band supported as the frequency band to be used in the Un space, depending on the information element "SupportedBandEUTRA" in the information element "UE-EUTRA-Capability" in "RRC UE(RN) Capability Information", and may notify the first frequency band supported as the frequency band to be used in the Uu space, depending on another information element (defined as new) in the information element "UE-EUTRA-Capability", as illustrated in Fig. 4.

In step S1009, the radio base station DeNB transmits "UE(RN) Capability Info Indication" to the mobile management node MME.

The radio base station DeNB transmits "Security Mode Command" to the relay node RN in step S1010, and transmits "RRC Connection Reconfiguration" including the "Attach Accept" to the relay node RN in step S1011.

The relay node RN transmits "Security Mode Complete" to the radio base station DeNB in step S1012, and transmits "RRC Connection Reconfiguration Complete" to the radio base station DeNB in step S1013.

In step S1014, the radio base station DeNB transmits "Initial Context Setup Response" to the mobile management node MME.

In step S1015, the relay node RN transmits "Attach Complete" to the mobile management node MME.

In step S1016, the radio base station DeNB determines the frequency band that can be used in the Uu space that is already acquired from the O&M server, and, the radio base station DeNB uses the first frequency band acquired in step S1008 to determine the carrier frequency and the bandwidth to be used in the Uu space, and transmits "RRC RN Configuration" including the carrier frequency and the bandwidth to the relay node RN.

In step S1017, the relay node RN sets the carrier frequency and the bandwidth included in "RRC RN Configuration" as the carrier frequency and bandwidth to be used in the Uu space, and transmits "RRC RN Configuration Complete" to the radio base station DeNB.

According to the mobile communication system of the present embodiment, the radio base station DeNB uses the first frequency band supported as the frequency band to be used in the Uu space by the relay node RN to determine the carrier frequency and the bandwidth to be used in the Uu space, and notifies the relay node RN, and thus in the relay node RN, it is possible to appropriately determine the carrier frequency and the bandwidth to be used in the Uu space.

### (First Modification)

Hereinafter, a mobile communication system according to a first modification will be explained while focusing on the difference relative to the mobile communication system according to the aforementioned first embodiment.

In the mobile communication system according to the first modification, the determination unit 12 of the radio base station DeNB is configured to use the above first frequency band and the frequency band acquired from the O&M server to determine whether the relay node RN must perform an "outband operation" or an "inband operation" in the above connection procedure.

When an "inband operation" is performed, the relay node RN is configured to use the carrier frequency and the bandwidth being used in the Un space as the carrier frequency and the bandwidth to be used in the Uu space.

On the other hand, when an "outband operation" is performed, the relay node RN is configured to use a carrier frequency and a bandwidth other than the carrier frequency and the bandwidth being used in the Un space as the carrier frequency and the bandwidth to be used in the Uu space.

Furthermore, the notification unit 13 of the radio base station DeNB is configured to notify the determination result by the determination unit 12 to the relay node RN.

Upon notification by the radio base station DeNB that an "inband operation" must be performed, the relay node RN is configured to use the carrier frequency and the bandwidth being used in the Un space as the carrier frequency and the bandwidth to be used in the Uu space.

On the other hand, upon notification by the radio base station DeNB that an "outband operation" must be performed, the relay node RN is configured to select a carrier frequency and a bandwidth other than the carrier frequency and the bandwidth being used in the Un space, from the first frequency band, as the carrier frequency and the bandwidth to be used in the Uu space.

### (Second Modification)

Hereinafter, a mobile communication system according to a second modification will be explained while focusing on the difference relative to the mobile communication system according to the aforementioned first embodiment.

The determination unit 12 of the radio base station DeNB is configured to determine the PCI (Physical Cell ID) of the cell subordinate to the relay node RN such that the PCI of the cell subordinate to the radio base station DeNB and the PCI of the cell subordinate to the relay node RN are not duplicated, in the above connection procedure.

The notification unit 13 of the radio base station DeNB is configured to notify the PCI of the cell subordinate to the relay node RN, that is determined by the determination unit 12 to the relay node RN by using an RRC message, in the above connection procedure.

The characteristics of the present embodiment as described above may be expressed as follows.

A first characteristic of the present embodiment is summarized as a connection method of connecting a relay node RN to a radio base station DeNB including a step A of notifying, by the relay node RN, to the radio base station DeNB, a first frequency band supported as a frequency band to be used in a Uu space (radio space with a mobile station UE); a step B of determining, by the radio base station DeNB, the carrier frequency (EARFCN) and the bandwidth (Band) to be used in the Uu space (radio space between the relay node RN and the mobile station UE) by using the first frequency band; and a step C of notifying, by the radio base station DeNB, to the relay node RN, the determined carrier frequency and the bandwidth.

In the first characteristic according to the present embodiment, in the relay node RN, the first frequency band is the same as the second frequency band supported as the frequency band to be used in the Un space (radio space between the relay node RN and the radio base station DeNB), and in the step A, the relay node RN may transmit "RRC UE(RN) Capability Information (message)" excluding the first frequency band and including the second frequency band, to the radio base station DeNB.

In the first characteristic according to the present embodiment, the radio base station DeNB includes a step of acquiring a frequency band that can be used in a Uu space (radio space between the relay node RN and the mobile station UE), from an O&M server (operation and maintenance server), and in the step B, the radio base station DeNB may determine the carrier frequency and the bandwidth to be used in the Uu space by using the first frequency band and the frequency band acquired from the O&M server.

A second characteristic of the present embodiment is summarized as a radio base station DeNB to which a relay node RN can be connected, and which includes an acquisition unit 11 that acquires a first frequency band supported as a frequency band to be used in a Uu space, from the relay node RN, in the procedure of connecting the relay node RN and the radio base station DeNB; a determination unit 12 that determines a carrier frequency and a bandwidth to be used in the Uu space by using the first frequency band in the connection procedure; and a notification unit 13 that notifies the determined carrier frequency and the bandwidth to the relay node RN in the connection procedure.

In the second characteristic according to the present embodiment, in the relay node RN, the first frequency band is the same as the second frequency band supported as the frequency band to be used in the Un space, and the acquisition unit 11 may be configured to acquire the second frequency band from the relay node RN, and regard the acquired second frequency band as the first frequency band.

In the second characteristic according to the present embodiment, the acquisition unit 11 may be configured to acquire the frequency band that can be used in the Uu space from an O&M server, and the determination unit 12 may be configured to determine the carrier frequency and the bandwidth by using the first frequency band and the frequency band acquired from the O&M server.

Note that the operation of the mobile management node MME, the radio base station DeNB, the relay node RN, or the mobile station UE may be performed by hardware, a software module performed by a processor, or a combination thereof.

The software module may be arranged in a storage medium of an arbitrary format such as a RAM (Random Access Memory), a flash memory, a ROM (Read Only Memory), an EPROM (Erasable Programmable ROM), an EEPROM (Electronically Erasable and Programmable ROM), a register, a hard disk, a removable disk, or a CD-ROM.

The storage medium is connected to the processor so that the processor can write and read information into and from the storage medium. Such a storage medium may also be accumulated in the processor. Such a storage medium and processor may be arranged in an ASIC. The ASIC may be arranged in the mobile management node MME, the radio base station DeNB, the relay node RN, or the mobile station UE. Furthermore, such a storage medium and processor may be arranged in the mobile management node MME, the radio base station DeNB, the relay node RN, or the mobile station UE as discrete components.

Thus, the present invention has been explained in detail by using the above-mentioned embodiments; however, it is obvious that for persons skilled in the art, the present invention is not limited to the embodiments explained herein. The present invention can be implemented as a corrected and modified mode without departing the gist and the scope of the present invention defined by the claims. Therefore, the description of the specification is intended for explaining the example only and does not impose any limited meaning to the present invention.

### [Reference Signs List]

UE ... Mobile station
MME ... Mobile management node
RN ... Relay node
DeNB ... Radio base station
11 ... Acquisition unit
12 ... Determination unit
13 ... Notification unit

## Claims

1. A connection method of connecting a relay node to a radio base station, comprising:
a step A of notifying, by the relay node, to the radio base station, a first frequency band supported as a frequency band to be used in a radio space with a mobile station;
a step B of determining, by the radio base station, the carrier frequency and the bandwidth to be used in the radio space between the relay node and the mobile station by using the first frequency band; and
a step C of notifying, by the radio base station, to the relay node, the determined carrier frequency and the bandwidth.

2. The connection method according to claim 1, wherein
in the relay node, the first frequency band is the same as the second frequency band supported as the frequency band to be used in the radio space between the relay node and the radio base station, and
in the step A, the relay node transmits a message excluding the first frequency band and including the second frequency band, to the radio base station.

3. The connection method according to claim 1 or claim 2, wherein
the radio base station has a step of acquiring a frequency band that can be used in the radio space between the relay node and the mobile station, from an operation and maintenance server, and
in the step B, the radio base station determines the carrier frequency and the bandwidth by using the first frequency band and the frequency band acquired from the operation and maintenance server.

4. A radio base station to which a relay node can be connected, comprising:
an acquisition unit that acquires a first frequency band supported as a frequency band to be used in a radio space with a mobile station, from the relay node, in the procedure of connecting the relay node and the radio base station;
a determination unit that determines a carrier frequency and a bandwidth to be used in the radio space between the relay node and the mobile station by using the first frequency band in the connection procedure; and
a notification unit that notifies the determined carrier frequency and the bandwidth to the relay node in the connection procedure.

5. The radio base station according to claim 4, wherein
in the relay node, the first frequency band is the same as the second frequency band supported as the frequency band to be used in the radio space between the relay node and the radio base station, and
the acquisition unit acquires the second frequency band from the relay node, and regards the acquired second frequency band as the first frequency band.

6. The radio base station according to claim 4 or claim 5, wherein
the acquisition unit is configured to acquire the frequency band that can be used in the radio space between the relay node and the mobile station from an operation and maintenance server, and
the determination unit determines the carrier frequency and the bandwidth by using the first frequency band and the frequency band acquired from the operation and maintenance server.
